(19) Europäisches Patentamt / European Patent Office / Office européen des brevets

(11) **EP 3 816 526 A1**

(12) **EUROPEAN PATENT APPLICATION**
published in accordance with Art. 153(4) EPC

(43) Date of publication:
05.05.2021 Bulletin 2021/18

(51) Int Cl.:
*F24F 7/06* (2006.01)     *B01D 39/16* (2006.01)
*B01D 46/52* (2006.01)     *F24F 3/16* (2021.01)
*F24F 13/28* (2006.01)

(21) Application number: 19824618.3

(22) Date of filing: 26.06.2019

(86) International application number:
PCT/JP2019/025479

(87) International publication number:
WO 2020/004504 (02.01.2020 Gazette 2020/01)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 29.06.2018 JP 2018124265

(71) Applicant: NITTO DENKO CORPORATION
Ibaraki-shi
Osaka 567-8680 (JP)

(72) Inventors:
• MORI Masaaki
  Ibaraki-shi, Osaka 567-8680 (JP)
• HORIE Yuri
  Ibaraki-shi, Osaka 567-8680 (JP)
• ARIMITSU Yukio
  Ibaraki-shi, Osaka 567-8680 (JP)

(74) Representative: Müller-Boré & Partner
Patentanwälte PartG mbB
Friedenheimer Brücke 21
80639 München (DE)

(54) **AIR FILTER UNIT AND AIR CONDITIONER**

(57) An air conditioner of the present disclosure includes a fan filter unit whose power consumption efficiency determined by the following equation is 600 kWh/(m$^2$•yr) or less when the fan filter unit is operated in such a manner that blowing efficiency $\eta$ of a fan is 0.75. In the following equation, Q represents a nominal flow rate (m$^3$/sec) of an air filter unit, $\Delta$P represents a pressure loss (Pa) of the air filter unit measured when air passes through the air filter unit at the nominal flow rate of the unit, and S represents an opening area (m$^2$) of the air filter unit. Equation: power consumption efficiency kWh/(m$^2$•yr) = {(Q $\times$ $\Delta$P)/($\eta$ $\times$ 1000)} $\times$ (24 $\times$ 365)/S. The air conditioner of the present disclosure is suitable for reducing power consumption even when including the air filter unit which is large in size and has high filtration performance. An air filter unit of the present disclosure is suitable for the air conditioner of the present disclosure.

FIG.1

EP 3 816 526 A1

**Description**

TECHNICAL FIELD

The present invention relates to an air filter unit and an air conditioner including an air filter unit.

BACKGROUND ART

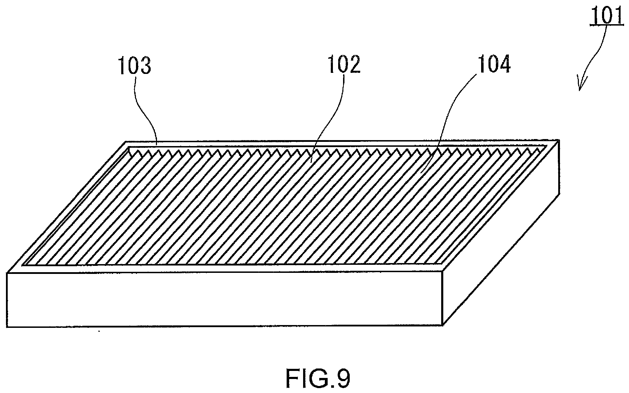

Large air conditioners supplying clean air to a space such as a clean room commonly include a plurality of air filter units that filter air. The air filter units are disposed in a flow path of air in the air conditioner. Fine dust in air is removed as the air passes through the air filter units. FIG. 9 shows a typical example of an air filter unit. An air filter unit 101 shown in FIG. 9 includes a filter pleat pack 102 and a frame 103 supporting the entire perimeter of a peripheral portion of the filter pleat pack 102. The filter pleat pack 102 has a structure in which a filter medium 104 in a sheet shape is folded by pleating. By virtue of the folding structure of the filter medium 104, the air filter unit 101 can secure a filtration area larger than an air permeation area. The air permeation area is commonly the opening area of the air filter unit 101. The frame 103 supporting the entire perimeter of the peripheral portion of the filter pleat pack 102 improves the handleability of the air filter unit 101 and makes it easy to dispose and replace the air filter unit 101 in an air conditioner. The air filter unit 101 is, for example, fixed to the air conditioner with the frame 103 held horizontally.

Patent Literature 1 discloses a clean room having, on its ceiling, a fan filter unit (FFU) in which an air filter unit is fixed. The FFU is installed on the ceiling with a frame of the air filter unit held horizontally. Patent Literature 1 also discloses a technique of reducing power consumption in a clean room by differently controlling the operation strength (the volume of air) for different FFUs included in the clean room.

CITATION LIST

Patent Literature

Patent Literature 1: JP 2013-228160 A

SUMMARY OF INVENTION

Technical Problem

However, differently controlling the volume of air for different FFUs is complicated and, in some cases, power consumption cannot be sufficiently reduced depending on the air conditioner and its usage environment. According to a study by the present inventors, it is difficult to reduce power consumption particularly when each air filter unit is large in size and has high collection efficiency.

The present invention aims to provide: an air conditioner suitable for reducing power consumption even when including air filter units each of which is large in size and has high filtration performance; and an air filter unit suitable for such an air conditioner.

Solution to Problem

The present invention provides an air conditioner including a fan filter unit, wherein the fan filter unit includes:

> a flow path of air, the flow path including an intake port and an exhaust port;
> a fan that creates a flow of the air from the intake port to the exhaust port; and
> an air filter unit that is disposed in the flow path and that filters the air introduced through the intake port,

the air filter unit includes a filter pleat pack and a frame supporting the entire perimeter of a peripheral portion of the filter pleat pack,

an opening area of the air filter unit is 1.35 m$^2$ or more,

filtration performance of the air filter unit is Class H13, as specified in European Norm (EN) 1822-1:2009, or higher, and

when the fan filter unit is operated in such a manner that blowing efficiency $\eta$ of the fan is 0.75, power consumption efficiency determined for the fan filter unit by the following equation is 600 kWh/(m$^2$ • yr) or less:

$$\text{equation: power consumption efficiency } kWh/(m^2 \cdot yr) = \{(Q \times \Delta P)/(\eta \times 1000)\} \times (24 \times 365)/S,$$

wherein Q represents a nominal flow rate ($m^3$/sec) of the air filter unit, $\Delta P$ represents a pressure loss (Pa) of the air filter unit measured when air passes through the air filter unit at the nominal flow rate of the unit, and S represents the opening area ($m^2$) of the air filter unit.

In another aspect, the present invention provides an air filter unit suitable for the above air conditioner.

That is, the present invention provides an air filter unit, including:

a filter pleat pack; and
a frame supporting the entire perimeter of a peripheral portion of the filter pleat pack, wherein
an opening area of the air filter unit is 1.35 $m^2$ or more,
a PF value of a filter medium included in the filter pleat pack is 23 or more, and
a self-weight deflection amount of the filter pleat pack evaluated with the frame held horizontally and in a state where the filter pleat pack excluding the peripheral portion is free is 30 mm or less.

Advantageous Effects of Invention

Although including the air filter unit which is large in size and has high filtration performance, the air conditioner of the present invention has an operational efficiency high for supplied power.

BRIEF DESCRIPTION OF DRAWINGS

FIG. 1 is a cross-sectional view schematically showing an example of the air conditioner of the present invention.
FIG. 2 is a perspective view schematically showing an example of an air filter unit included in the air conditioner of the present invention.
FIG. 3 is a schematic diagram showing another example of the air conditioner of the present invention.
FIG. 4 is a perspective view schematically showing an example of an air filter unit of the present invention.
FIG. 5 is a perspective view schematically showing an example of a filter pleat pack included in the air filter unit of the present invention.
FIG. 6 is a diagram for illustrating the method for evaluating a self-weight deflection amount of a filter pleat pack included in an air filter unit.
FIG. 7 is a cross-sectional view schematically showing an example of the air filter unit of the present invention in a state where a peripheral portion of the filter pleat pack is supported by a frame.
FIG. 8 is a cross-sectional view schematically showing another example of the air filter unit of the present invention.
FIG. 9 is a perspective view schematically showing an example of a conventional air filter unit.

DESCRIPTION OF EMBODIMENTS

Hereinafter, embodiments of the present invention will be described with reference to the drawings. The present invention is not limited to the following embodiments.

[Air conditioner]

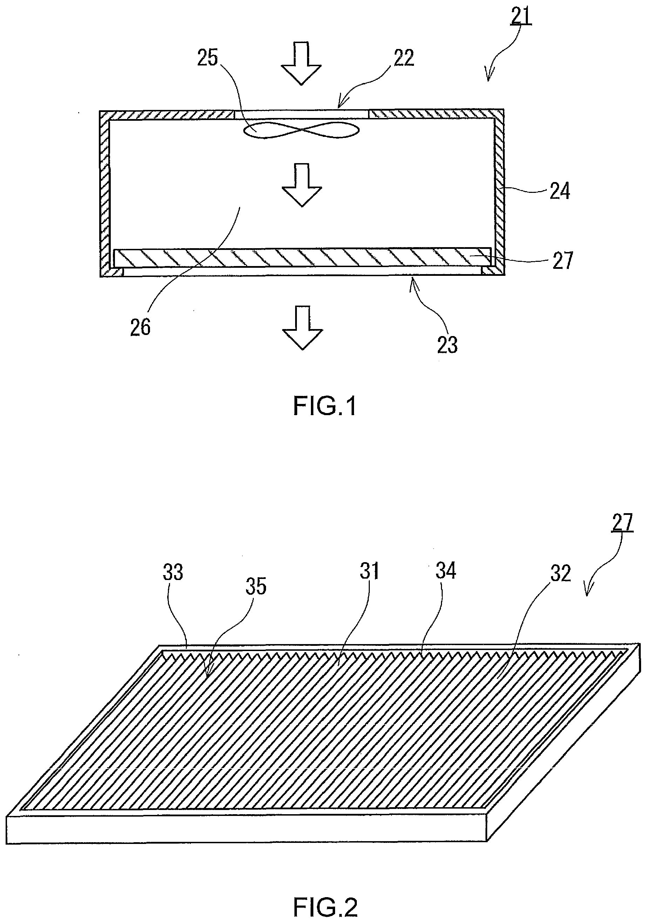

FIG. 1 shows an FFU 21 as an example of the air conditioner of the present disclosure. The FFU 21 includes a flow path 26 of air, the flow path 26 including an intake port 22 and an exhaust port 23. The intake port 22 is located at one end of the flow path 26. The exhaust port 23 is located at the other end of the flow path 26. The flow path 26 is arranged inside a housing 24. The FFU 21 includes a fan 25 and an air filter unit 27. The fan 25 may be a low-pressure fan. The air filter unit 27 is disposed in the flow path 26 and filters the air introduced through the intake port 22. The fan 25 is disposed in the flow path 26 and creates a flow of the air from the intake port 22 to the exhaust port 23. The air is introduced through the intake port 22 to the flow path 26 by activating the fan 25. Fine powder dust is removed from the air while the air is passing through the air filter unit 27. The air is then blown out of the FFU 21 through the exhaust port 23 (refer to the arrows in FIG. 1).

As shown in FIG. 2, the air filter unit 27 includes a filter pleat pack (hereinafter referred to as "pleat pack") 32 and a frame 33 supporting the pleat pack 32. The pleat pack 32 has a structure in which a filter medium 31 in a sheet shape is folded to the shape of pleats. The frame 33 supports the entire perimeter of a peripheral portion 34 of the pleat pack 32. An opening area (the area of an opening 35 of the frame 33) of the air filter unit 27 is 1.35 $m^2$ or more. Filtration performance of the air filter unit 27 is Class H13, as specified in European Norm (hereinafter referred to as "EN") 1822-1:2009, (hereinafter referred to as "Class H13") or higher.

Although including the air filter unit 27 which is large in size and has high filtration performance, the FFU 21 has an operational efficiency high for supplied power. When the FFU 21 is operated in such a manner that blowing efficiency $\eta$ of the fan is 0.75, power consumption efficiency determined for the FFU 21 by the following equation (1) is 600 kWh/($m^2$•yr) or less:

$$\text{equation (1): power consumption efficiency kWh/(m}^2\cdot\text{yr)} = \{(Q \times \Delta P)/(\eta \times 1000)\} \times (24 \times 365)/S.$$

In the equation (1), Q represents a nominal flow rate ($m^3$/sec) of the air filter unit. $\Delta P$ represents a pressure loss (Pa) of the air filter unit measured when air passes through the air filter unit at the nominal flow rate of the unit. S represents the opening area ($m^2$) of the air filter unit.

The blowing efficiency $\eta$ of the fan varies depending on the operation conditions of the fan (the operation conditions of the fan filter unit including the fan), and can be determined from power supplied to the fan, the volume of air generated by the fan, and the total pressure generated by the fan. Specifically, the blowing efficiency is calculated by the following equation (2). In the equation (2), the volume of air generated by the fan is a value obtained by converting an actual measured value to the volume of air in a standard state (temperature: 20°C; pressure: 101.3 kPa; relative humidity: 65%; density: 1.20 kg/$m^3$).

$$\text{Equation (2): blowing efficiency } \eta = [\text{volume of air generated by fan (m}^3\text{/sec)} \times \text{total pressure generated by fan (kPa)]/shaft power of fan (kW)}$$

The nominal flow rate Q of an air filter unit is a flow rate specified for the air filter unit by its manufacturer, and is the maximum flow rate up to which the filtration performance of the unit is guaranteed by the manufacturer.

A pressure loss $\Delta P$ of an air filter unit can be determined in accordance with the pressure loss test in the test method type 1 specified in Japanese Industrial Standards (hereinafter referred to as "JIS") B9908:2011. $\Delta P$ is a value measured at the nominal flow rate of the air filter unit to be evaluated. When the pressure loss $\Delta P$ is evaluated, the angle of the frame of the air filter unit and the direction in which air passes correspond to those set when an FFU including the unit is operated. For example, the pressure loss $\Delta P$ of an air filter unit whose frame is held horizontally during operation of an FFU and though which air passes from top to bottom is evaluated with the frame held horizontally and by letting air pass through the unit from top to bottom. For this evaluation, an apparatus can be used, for example, having the same configuration as that of a test apparatus as in the type 1 specified in JIS B 9908:2011, capable of fixing the air filter unit with the frame held horizontally, and capable of letting air flow from top to bottom through the air filter unit fixed.

The power consumption efficiency of the FFU 21 may be 500 kWh/($m^2$•yr) or less, 400 kWh/($m^2$•yr) or less, 300 kWh/($m^2$•yr) or less, or even 250 kWh/($m^2$•yr) or less.

The FFU 21 includes the air filter unit 27 having an opening area of 1.35 $m^2$ or more. The greater the opening area is, the higher the nominal flow rate of the air filter unit 27 can be increased. The increase in the nominal flow rate, for example, allows the FFU 21 including the air filter unit 27 to handle an increased volume of air passing through the FFU 21, making it possible to decrease the number of FFUs required to construct a clean room. The decrease in the number of FFUs contributes to lower the cost of the clean room and/or improve ease of maintenance. Moreover, the nominal flow rate of the air filter unit 27 can be made higher than the nominal flow rate of an air filter module having a structure in which a plurality of air filter units are tightly arranged like tiles and having the same opening area (opening area of a main frame) as that of the air filter unit 27. The air filter module includes, in addition to the frame (main frame) forming the outer shape of the module, a frame (sub frame) for each of the filter units arranged in the opening of the main frame. The nominal flow rate of the air filter module decreases by at least the area of the sub frames in the opening area.

The opening area of the air filter unit 27 may be 1.38 $m^2$ or more, 1.44 $m^2$ or more, or even 1.48 $m^2$ or more.

The short side of the opening 35 may be 600 mm or more, 800 mm or more, or even 1000 mm or more.

The shape of the opening 35 is typically a square. When the shape of the opening 35 is a square, the air filter unit 27 having an opening area of 1.35 $m^2$ typically has a size commonly referred to as "4 feet × 4 feet".

The FFU 21 includes the air filter unit 27 having high filtration performance. Therefore, the FFU 21 can be included in an air conditioner system for a clean room. When included in an air conditioner system for a clean room, the FFU 21 is installed, for example, on the ceiling of the clean room with the exhaust port 23 facing the inside of the room.

In which style and by which method the FFU 21 is installed in a clean room are not limited to the above example. The application of the FFU 21 is not limited to an air conditioner system for a clean room. The FFU 21 can also be used, for example, as an equipment fan filter unit (EFU) that supplies clean air to a relatively limited range around the exhaust port 23.

The filtration performance of the air filter unit 27 is Class H13 or higher. When having an initial pressure loss of 245 Pa or less, an air filter unit having filtration performance of Class H13 or higher corresponds to an air filter unit composed of a high-efficiency particulate air grade (HEPA) filter or an ultra-low penetration air grade (ULPA) filter as specified in JIS Z 8122:2000. The filtration performance of the air filter unit 27 may be Class U15, as specified in EN 1822-1:2009, or higher. When having an initial pressure loss of 245 Pa or less, an air filter unit having filtration performance of Class U15 or higher corresponds to an air filter unit composed of a ULPA filter as mentioned above. The filtration performance of the air filter unit 27 may be Class H14, as specified in EN 1822-1:2009, or higher, Class U15 or higher, or even Class U16 or higher.

The air filter unit 27 may be disposed in the flow path 26 in such a manner that the frame 33 is held horizontally during operation of the FFU 21. The air filter unit 27 may be disposed so as to be detachable from the flow path 26. The disposition condition (for example, the position and the angle) of the air filter unit 27 in the FFU 21 is not limited as long as the air filter unit 27 is disposed in the flow path 26.

In the air filter unit 27, the pleat pack 32 may be horizontal or may deflect downward when the frame 33 is held horizontally with the air (air to be filtered) inflow side up. The air inflow side is the intake port 22 side when the air filter unit 27 is disposed in the FFU 21.

The FFU 21 can be installed on the ceiling of a clean room in such a manner that the frame 33 of the air filter unit 27 is held horizontally.

The air filter unit 27 may include a net-like body (hereinafter described as "lath net", which is a name persons skilled in the art commonly use) connected to the frame 33 and serving to protect the pleat pack 32. The air filter unit 27 including a lath net is commonly disposed in the FFU 21 in such a manner that the lath net is on the exhaust port 23 side with respect to the pleat pack 32.

In the FFU 21 shown in FIG. 1, the fan 25 is disposed near the intake port 22 and in the housing 24. The disposition condition of the fan 25 in the FFU 21 is not limited as long as the flow of air from the intake port 22 to the exhaust port 23 can be created by activating the fan 25. The type of the fan 25 is typically, but not limited to, an axial-flow fan.

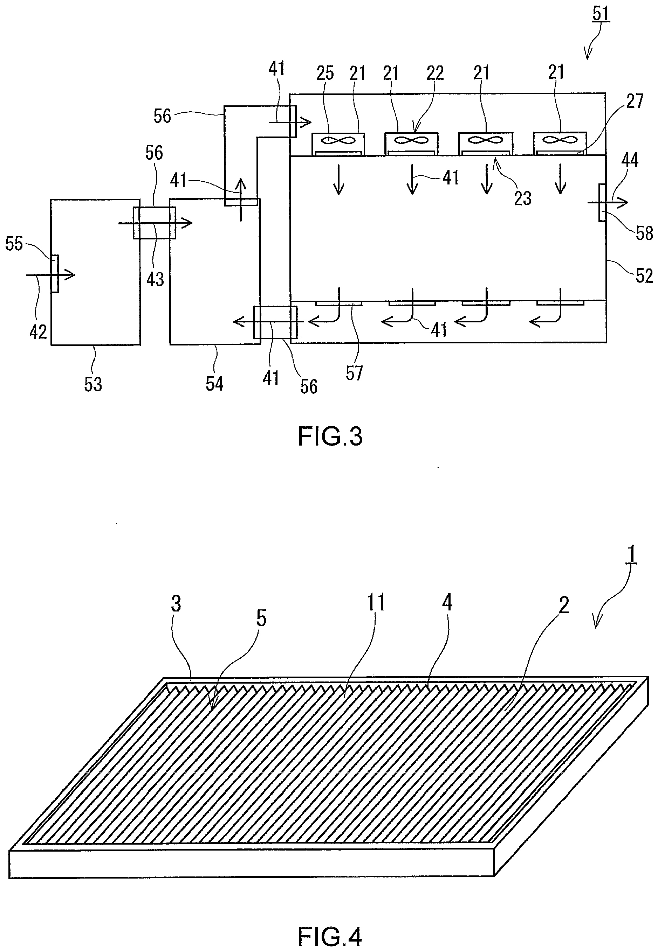

FIG. 3 shows an air conditioner system 51 for a clean room 52 as another example of the air conditioner of the present disclosure. The air conditioner system 51 includes the clean room 52, an external air conditioner 53, and an internal air conditioner 54. The external air conditioner 53 and the internal air conditioner 54 are connected to each other by a duct 56, and the internal air conditioner 54 and the clean room 52 are connected to each other by another duct 56. The air conditioner system 51 includes the plurality of FFUs 21. Each FFU 21 is installed on the ceiling of the clean room 52 in such a manner that the frame 33 of the air filter unit 27 is held horizontally.

An intake port 57 is provided on the floor of the clean room 52. The intake port 57 is, for example, a grating floor. The entire floor of the clean room 52 may be the intake port 57. The air conditioner system 51 includes a cyclic air flow path extending from the inside of the clean room 52 to the intake port 57, to the internal air conditioner 54, to the intake port 22 of the FFU 21, to the air filter unit 27, to the exhaust port 23 of the FFU 21.

The external air conditioner 53 includes an outside air introduction port 55 and a prefilter for removing a certain amount of dust in outside air 42 introduced through the outside air introduction port 55. The internal air conditioner 54 has the function of continuously or intermittently mixing air from the clean room 52 and outside air 43 from the external air conditioner 53 according to the operational status of the clean room 52. The internal air conditioner 54 may include a prefilter and/or air filter unit for removing dust in air passing through the internal air conditioner 54. The external air conditioner 53 and/or the internal air conditioner 54 may have the function of controlling the air temperature.

In the air conditioner system 51, activation of the fan 25 of the FFU 21 generates an airflow 41 leaving the inside of the clean room 52, going through the intake port 57, the internal air conditioner 54, the intake port 22 of the FFU 21, the air filter unit 27, and the exhaust port 23 of the FFU 21 in sequence, and returning to the inside of the clean room 52. The airflow 41 having gone through the internal air conditioner 54 may include the outside air 43. After passing through the air filter unit 27 to remove fine powder dust, air included in the airflow 41 is blown into the inside of the clean room 52 through the exhaust port 23. The air conditioner system 51 shown in FIG. 3 is a downflow air conditioner system. The clean room 52 includes an external exhaust port 58 and, as necessary, can discharge a portion 44 of air in the clean room 52 to the outside.

Although including the FFU 21 including the air filter unit 27 which is large in size and has high filtration performance, the air conditioner system 51 has an operational efficiency high for supplied power.

The disposition condition of the FFU 21 in the air conditioner system 51 is not limited to the example shown in FIG. 3 as long as the airflow 41 is generated by activating the fan 25 and the desired performance of the clean room 52 can be achieved.

In the air conditioner system 51, at least one FFU may be the FFU 21 described above. In the example shown in FIG. 3, every FFU is the FFU 21 described above.

The air conditioner system 51 can have any configuration as long as the air conditioner system 51 includes the FFU 21.

The air conditioner of the present disclosure can include, for example, an air filter unit 1, described hereinafter, of the present disclosure as the air filter unit 27.

[Air filter unit]

FIG. 4 shows an example of the air filter unit 1. The air filter unit 1 shown in FIG. 4 includes a pleat pack 2 and the frame 3 supporting the pleat pack 2. The frame 3 supports the entire perimeter of a peripheral portion 4 of the pleat pack 2. The opening area (the area of an opening 5 of the frame 3) S of the air filter unit 1 is 1.35 m$^2$ or more.

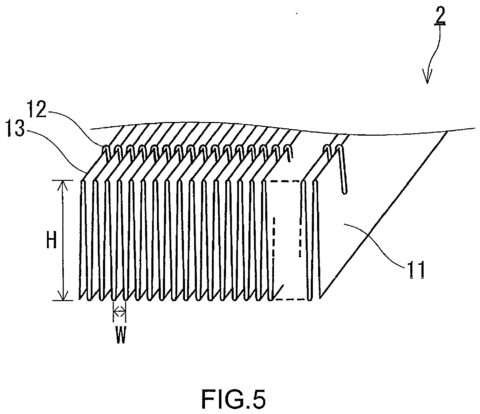

As shown in FIG. 5, the pleat pack 2 has a structure in which a filter medium 11 in a sheet shape is folded to the shape of pleats. The pleat pack 2 includes a bead 12. The bead 12 is a string formed of a resin and is a kind of spacer for maintaining the shape of the pleats of the filter medium 11. The bead 12 is disposed on a surface of the folded filter medium 11 so as to form a continuous or intermittent line along a direction intersecting with a pleat line 13 (fold line) of the filter medium 11.

A PF (performance factor) value of the filter medium 11 included in the pleat pack 2 is 23 or more. A PF value is a measure of the filtration capability of a filter medium. The filter medium 11 having a PE value of 23 or more has high filtration capability. Therefore, the air filter unit 1 including the pleat pack 2 including the filter medium 11 can have high filtration capability.

In the air filter unit 1, a self-weight deflection amount of the pleat pack 2 evaluated with the frame 3 held horizontally (in other words, with the frame 3 held in such a manner that the direction of an airflow passing through the air filter unit 1 is vertical) and in a state where the pleat pack 2 excluding the peripheral portion 4 is free is 30 mm or less.

In the case of an air filter unit including a pleat pack and a frame supporting the entire perimeter of a peripheral portion of the pleat pack, a central portion of the pleat pack excluding the peripheral portion deflects downward under gravity when the frame is held horizontally. In particular, in the case of a large air filter unit having an opening area S of 1.35 m$^2$ or more, downward deflection (hereinafter referred to as "self-weight deflection of a pleat pack") of the central portion of the pleat pack thereof under gravity tends to be large. Self-weight deflection of a pleat pack increases a structural pressure loss of an air filter unit including the pleat pack, and the increase in structural pressure loss increases the pressure loss ΔP of the air filter unit. In the case of an air filter unit including a lath net, the pleat pack thereof can deflect under gravity to be in contact with the lath net. An increase in the amount of contact of the pleat pack with the lath net also increases the structural pressure loss of the air filter unit.

In the air filter unit 1, in spite of the fact that the opening area S is 1.35 m$^2$ or more, the self-weight deflection amount (hereinafter referred to as "self-weight deflection amount B") of the pleat pack evaluated with the frame held horizontally and in a state where the pleat pack excluding the peripheral portion 4 is free is 30 mm or less. This reduces an increase in structural pressure loss attributable to the self-weight deflection of the pleat pack 2, inclusive of an increase in structural pressure loss due to an increase in amount of contact with the lath net. Consequently, an increase in pressure loss ΔP, especially the pressure loss ΔP obtained with the frame 3 held horizontally is reduced for the air filter unit 1. Therefore, an air conditioner including the air filter unit 1 can have a reduced power consumption efficiency value.

The self-weight deflection amount B of the pleat pack 2 may be 27 mm or less, 26 mm or less, 25 mm or less, 24 mm or less, 22 mm or less, 20 mm or less, or even 15 mm or less. The lower limit of the self-weight deflection amount B is, for example, 0 mm or more, and may be 1 mm or more, 3 mm or more, or even 5 mm or more.

In the evaluation of the self-weight deflection amount B of a pleat pack, the phrase "a state where the pleat pack excluding the peripheral portion thereof is free" specifically refers to "a state where no members other than a member supporting the peripheral portion have contact with the pleat pack". Therefore, for example, when the frame is held horizontally and the self-weight deflection of the pleat pack is limited by contact with a lath net, it is necessary to prevent the lath net from being in contact with the pleat pack by partially or completely removing the lath net.

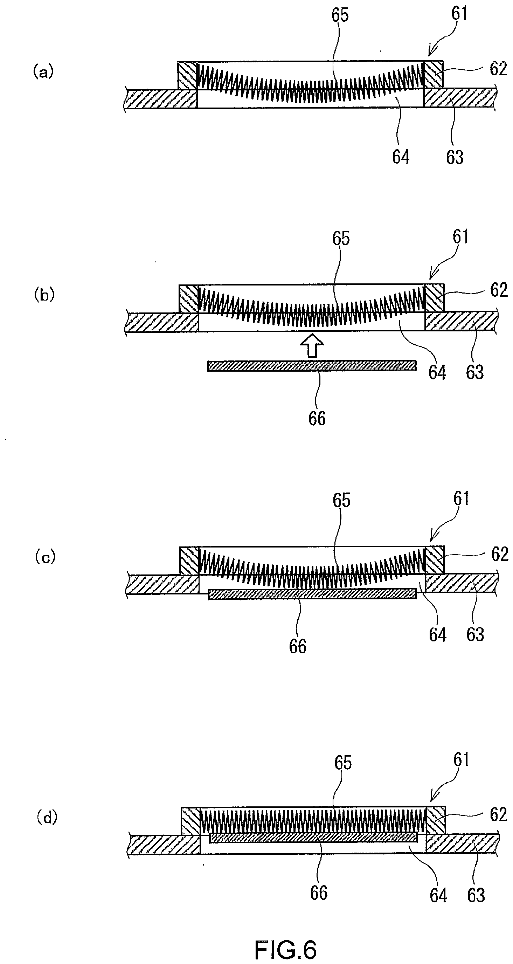

The self-weight deflection amount B of a pleat pack can be evaluated, for example, in the following manner (refer to FIG. 6). First, as shown in (a), the air filter unit 61 is placed on a test stand 63 with an opening portion 64 in such a manner that a frame 62 of the air filter unit 61 to be evaluated is horizontal. The air filter unit 61 is placed in such a manner that the test stand 63 does not prevent self-weight deflection of a pleat pack 65 included in the unit 61. The air filter unit 61 can be placed without preventing self-weight deflection, for example, by adjusting the position of the air filter unit 61 with respect to the opening portion 64. The opening portion 64 may have the same shape and size as those of the opening of the frame 62. In this case, the air filter unit 61 may be placed in such a manner that the opening of the frame 62 and the opening portion 64 are aligned with each other when viewed in the direction perpendicular to the upper surface of the test stand 63. In the state of (a), the pleat pack 65 deflects due to its own weight.

Next, as shown in (b), a plate 66 is slowly and vertically raised from below. The area of the plate 66 is 95% or more with respect to the area of the opening of the frame 62, and the shape of the plate 66 and the positional relation thereof with the opening portion 64 allow the plate 66 to go upward and downward through the opening portion 64. The plate 66 is raised with the upper surface thereof kept horizontal.

Next, as shown in (c), a height y1 of the plate 66 is recorded at the moment when the upper surface of the plate 66 comes into contact with any pleat line of the pleat pack 65. The contact with any pleat line is confirmed by observing the pleat pack 65 and the plate 66 from the lateral of the air filter unit 61 in the direction in which the pleat line extends.

Next, as shown in (d), the plate 66 is further raised, and a height y2 of the plate 66 is recorded at the moment when the upper surface of the plate 66 comes into contact with at least 90% of all the pleat lines of the pleat pack 65. The absolute value of the difference between the heights y2 and y1 can be employed as the self-weight deflection amount B of the pleat pack 65. A horizontal plane defined assuming that at least 90% of all the pleat lines of the pleat pack 65 are thereon can be a baseline for the self-weight deflection amount B.

The short side of the opening 5 of the air filter unit 1 may be 600 mm or more, 800 mm or more, or even 1000 mm or more.

The shape of the opening 5 is typically a square. When the shape of the opening 5 is a square, the air filter unit 1 having an opening area of 1.35 $m^2$ typically has a size commonly referred to as "4 feet $\times$ 4 feet".

The nominal flow rate of the air filter unit 1 having an opening area of 1.35 $m^2$ or more can be increased higher than that of an air filter unit having a smaller opening area. The increase in the nominal flow rate, for example, allows an FFU including the air filter unit 1 to handle an increased volume of air passing through the FFU. The nominal flow rate of the air filter unit 1 can be made higher than the nominal flow rate of an air filter module having the same opening area (the opening area of the main frame thereof). The opening area of the air filter unit 1 may be 1.38 $m^2$ or more, 1.44 $m^2$ or more, or even 1.48 $m^2$ or more.

The PF value of the filter medium 11 included in the pleat pack 2 is 23 or more. A filter medium having a larger PF value has higher filtration capability. A filter medium having a PF value of 23 or more can be used as a medium of a high-performance or ultra-high-performance air filter unit used in a clean room in semiconductor industry, pharmaceutical industry, and the like. The PF value of a filter medium can be determined by the following equation (3) from a pressure loss $PL_F$ (unit: mmH$_2$O) of the medium measured when air passes through the medium at a linear velocity of 5.3 cm/sec and collection efficiency $CE_F$ (unit: %) of the medium measured when air passes through the medium at a linear velocity of 5.3 cm/sec and using polyalphaolefin particles having a particle diameter of 0.10 to 0.20 μm.

$$\text{Equation (3): PF value} = \{-\log[(100 - \text{CE}_F)/100]/\text{PL}_F\} \times 100$$

The PF value of the filter medium 11 may be 25 or more, 26 or more, 27 or more, 28 or more, or even 30 or more.

The pressure loss $PL_F$ of the filter medium 11 is, for example, 10 to 400 Pa, and may be 100 to 400 Pa or 100 to 350 Pa.

The pressure loss $PL_F$ of a filter medium can be evaluated in the following manner. A measurement holder composed of two plates having the same shape is prepared. A through hole (having a circular cross-section and an effective air permeation area of 100 $cm^2$) is arranged on each plate. Next, a filter medium to be evaluated is sandwiched by the plates. The filter medium is sandwiched in such a manner that the through holes of the plates are aligned with each other when viewed from a direction perpendicular to a principal surface of either of the plates and that the filter medium covers an opening of the through hole of each plate. Additionally, the filter medium is sandwiched so as not to form a gap between each plate and the filter medium. A fixing member such as an o-ring or a double-faced adhesive tape may be used so as not to form a gap. Such a fixing member is used so as not to prevent the flow of air passing through the through holes. Next, in a chamber to which a flowmeter and a pressure meter (manometer) are connected, the holder is set so that air will pass only through the through holes and a portion of the filter medium, the portion being located between the through holes. Then, a pressure difference is generated between one face of the holder and the other face of the holder; accordingly, air starts to flow through the through holes and the filter medium. The pressure difference (static pressure difference) is measured using the pressure meter at a moment when the linear velocity measured using the flowmeter for the air going through the through holes and the filter medium becomes 5.3 cm/sec. The pressure difference as defined above is measured 8 times for one medium, and the average of the measured values is employed as the pressure loss $PL_F$ of the filter medium which is an evaluation object.

The collection efficiency $CE_F$ of the filter medium 11 is, for example, 20 to 100%, and may be 90 to 100% or 99.9 to 100%.

The collection efficiency $CE_F$ of a filter medium can be evaluated in the following manner. A measurement holder composed of two plates having the same shape is prepared. A through hole (having a circular cross-section and an effective air permeation area of 100 $cm^2$) is arranged on each plate. Next, a filter medium to be evaluated is sandwiched by the plates. The filter medium is sandwiched in such a manner that the through holes of the plates are aligned with each other when viewed from a direction perpendicular to a principal surface of either of the plates and that the filter medium covers an opening of the through hole of each plate. Additionally, the filter medium is sandwiched so as not to form a gap between each plate and the filter medium. A fixing member such as an o-ring or a double-faced adhesive tape may be used so as not to form a gap. Such a fixing member is used so as not to prevent the flow of air passing through the through holes. Next, in a chamber to which a flowmeter and a pressure meter (manometer) are connected, the holder is set so that air will pass only through the through holes and a portion of the filter medium, the portion being located between the through holes. Then, a pressure difference is generated between one face of the holder and the other face of the holder; accordingly, air starts to flow through the through holes and the filter medium. The pressure difference is adjusted so that the linear velocity measured using the flowmeter for the air going through the through holes and the medium will be maintained at 5.3 cm/sec. Then, polyalphaolefin particles having a particle diameter of 0.10 to 0.20 pm (average particle diameter: 0.15 pm) are introduced into the air going through the medium at a concentration of $4 \times 10^8$ particles/L or more. After that, the concentration of the polyalphaolefin particles included in the air having gone through the medium is measured using a particle counter disposed downstream of the measurement holder, and the collection efficiency $CE_F$ of the evaluation object is determined by the following equation (4).

$$\text{Equation (4): collection efficiency } CE_F = [1 - (\text{particle concentration on downstream side})/(\text{particle concentration on upstream side})] \times 100 \ (\%)$$

The surface density of the filter medium 11 is, for example, 50 g/m$^2$ or more and 100 g/m$^2$ or less. The upper limit of the surface density may be 90 g/m$^2$ or less, 80 g/m$^2$ or less, 75 g/m$^2$ or less, or even 70 g/m$^2$ or less. The lower limit of the surface density may be 55 g/m$^2$ or more or even 60 g/m$^2$ or more. The surface density of the filter medium 11 can be determined by dividing the weight of the filter medium 11 by the area of a principal surface thereof.

The filter medium 11 can be formed of a material same as a material forming any known filter medium. The filter medium 11 is, for example, a medium formed of glass fibers or a medium including a polytetrafluoroethylene (hereinafter referred to as "PTFE") porous membrane. The filter medium 11 including a PTFE porous membrane is preferred because, in that case, a high PF value can be achieved and the amount of dust produced from the filter medium 11 itself is low.

The PTFE porous membrane is typically formed of a number of PTFE fibrils which are fine fibrous structures. The PTFE porous membrane may have a PTFE node connected to the fibril.

The PTFE porous membrane can be formed, for example, by forming a mixture of an unsintered PTFE powder and a liquid lubricant into a film by extrusion, calendering, and/or the like, removing the liquid lubricant from the resulting unsintered film, and stretching the film. After the formation of the unsintered film, sintering in which the film is heated to a temperature equal to or higher than the melting point of PTFE may be performed at any timing. The liquid lubricant is, for example, a hydrocarbon oil such as naphtha, white oil, or liquid paraffin. The liquid lubricant is not limited as long as the liquid lubricant can wet the surface of the PTFE powder and be removed later. One example of the stretching is biaxial stretching which is a combination of stretching in the MD direction (longitudinal direction) of the unsintered film at a stretching ratio of 2 to 60 at a stretching temperature of 150 to 390°C and stretching in the TD direction (width direction) of the film at a stretching ratio of 10 to 60 at a stretching temperature of 40 to 150°C. The stretching is not limited to this example.

The thickness of the PTFE porous membrane is, for example, 1 to 100 pm. The average pore diameter of the PTFE porous membrane is, for example, 0.1 to 50 pm.

The porosity of the PTFE porous membrane is, for example, 70 to 98%. The small average pore diameter and the high porosity of the PTFE porous membrane can decrease the pressure loss of the filter medium 11 including the PTFE porous membrane and can increase the collection efficiency thereof. The porosity of the PTFE porous membrane can be evaluated in the following manner. The PTFE porous membrane to be evaluated is cut to given dimensions (for example, a circle having a diameter of 6 cm), and the volume and weight thereof are determined. The porosity of the PTFE porous membrane can be calculated by substituting the volume and weight into the following equation (5). In the equation (5), V (unit: cm$^3$) represents the measured volume, W (unit: g) represents the measured weight, and D (unit: g/cm$^3$) represents the true density (2.2 g/cm$^3$) of PTFE.

$$\text{Equation (5): porosity } (\%) = 100 \times [V - (W/D)]/V$$

The surface density of the PTFE porous membrane is, for example, 0.05 to 10 g/m$^2$, and may be 0.1 to 5 g/m$^2$ or 0.3 to 3 g/m$^2$.

The PF value of the PTFE porous membrane can be determined by the following equation (6) from a pressure loss $PL_M$ (unit: mmH$_2$O) of the PTFE porous membrane measured when air passes through the PTFE porous membrane at a linear velocity of 5.3 cm/sec and collection efficiency $CE_M$ (unit: %) of the PTFE porous membrane measured when air passes through the PTFE porous membrane at a linear velocity of 5.3 cm/sec using polyalphaolefin particles having a particle diameter of 0.10 to 0.20 pm.

$$\text{Equation (6): PF value} = \{-\log[(100 - CE_M)/100]/PL_M\} \times 100$$

The pressure loss and collection efficiency of the PTFE porous membrane can be evaluated by applying the above methods for measuring the pressure loss and collection efficiency of a filter medium. Specifically, the PTFE porous membrane to be evaluated, instead of a filter medium, may be fixed to the measurement holders. The PF value, pressure loss, and collection efficiency of the PTFE porous membrane are generally the same as the PF value, pressure loss, and collection efficiency of the filter medium 11, respectively.

The filter medium 11 including the PTFE porous membrane may further include an air-permeable supporting member. The air-permeable supporting member is a layer having high air permeability in the thickness direction compared to the PTFE porous membrane and has the function of protecting the PTFE porous membrane. The air-permeable supporting member is, for example, formed of fibers such as short fibers and/or long fibers. The air-permeable supporting member is, for example, non-woven fabric, woven fabric, or a mesh. The air-permeable supporting member is preferably formed of non-woven fabric because of its excellent air permeability, strength, and flexibility.

Examples of the material forming the air-permeable supporting member include: polyolefins such as polyethylene (PE) and polypropylene (PP); polyesters such as polyethylene terephthalate (PET); polyamides including aromatic polyamides; and composite materials thereof. The material is preferably a polyolefin and more preferably PE because, in that case, the material relatively strongly joins to the PTFE porous membrane.

One example of the composite material forming the air-permeable supporting member is composite fibers having a core-sheath structure including a core and a sheath covering the core. The core and sheath of the composite fibers are formed of different materials. The melting point of the material forming the sheath is preferably lower than the melting point of the material forming the core. The material forming the core is, for example, a polyester such as PET. The material forming the sheath is, for example, a polyolefin such as PE. When the material forming the sheath is a polyolefin, the polyolefin, which relatively strongly joins to the PTFE porous membrane, can be exposed to a surface of the air-permeable supporting member, the surface being joined to the PTFE porous membrane.

The average fiber diameter of the fibers forming the air-permeable supporting member is, for example, 1 to 50 μm, and may be 1 to 30 μm or 10 to 30 pm.

The surface density of the air-permeable supporting member is, for example, 20 g/m$^2$ or more and 70 g/m$^2$ or less. The upper limit of the surface density may be 50 g/m$^2$ or less, 40 g/m$^2$ or less, 35 g/m$^2$ or less, or even 30 g/m$^2$ or less. The lower limit of the surface density may be 25 g/m$^2$ or more.

In the filter medium 11 including the PTFE porous membrane and the air-permeable supporting member, the PTFE porous membrane and the air-permeable supporting member are commonly joined to each other. The joining method is, for example, but not limited to thermal lamination or lamination using an adhesive. Joining by thermal lamination is preferred because an increase in pressure loss at the joining interface can be reduced.

The filter medium 11 may include two or more PTFE porous membranes and/or two or more air-permeable supporting members. The filter medium 11, for example, has a three-layer structure including one PTFE porous membrane and two air-permeable supporting members sandwiching the PTFE porous membrane. The filter medium 11 may have a multilayer structure including three or more layers. When the filter medium 11 has a multilayer structure including the PTFE porous membrane and the air-permeable supporting member, each of the outer layers of the filter medium 11 is preferably the air-permeable supporting member. In this case, the strength and durability of the filter medium 11 can be improved. Moreover, in this case, a collection efficiency decrease resulting from the pleating of the filter medium 11 into the pleat pack 2 can be reduced.

The filter medium 11 may have a configuration other than the above examples as long as the self-weight deflection amount B of the pleat pack 2 is 30 mm or less.

Any known method can be employed as the method for manufacturing the filter medium 11. The filter medium 11 including the PTFE porous membrane and the air-permeable supporting member can be manufactured, for example, by joining the PTFE porous membrane and the air-permeable supporting member by thermal lamination.

A pleat height H (the distance between one surface of the pleat pack 2 and the other surface thereof; refer to FIG. 5) of the filter medium 11 of the pleat pack 2 is, for example, 25 to 50 mm, and may be 25 to 40 mm or 25 to 35 mm. The shape of the pleats of the filter medium of the pleat pack affects the structural pressure loss of the air filter unit. When the pleat height H is in such a range, the structural pressure loss of the air filter unit 1 can be decreased further.

A pleat width W (the interval between the pleat lines 13 adjacent to each other on one surface of the pleat pack 2; refer to FIG. 5) of the filter medium 11 of the pleat pack 2 is, for example, 2.5 to 4.2 mm, and may be 2.8 to 3.6 mm or 3.0 to 3.4 mm. When the pleat width W is in such a range, the structural pressure loss of the air filter unit 1 can be decreased further.

The bead 12 may be disposed on one surface of the filter medium 11 or may be disposed on both surfaces thereof. When the filter medium 11 includes the PTFE porous membrane and the air-permeable supporting member, the bead 12 is preferably disposed on a surface of the air-permeable supporting member. The bead 12 can be formed, for example, by applying a molten resin in a string form to a surface of the filter medium 11. Examples of the resin forming the bead 12 include polyamides, polyolefins, and ethylene-vinyl acetate copolymer. The resin forming the bead 12 is not limited to the above examples.

The amount of the bead 12 disposed (the amount of the bead 12 disposed per $m^2$ of the opening area of the air filter unit 1; unit: $g/m^2$) in the pleat pack 2 is, for example, 40 to 80 $g/m^2$, and may be 40 to 70 $g/m^2$, 40 to 60 $g/m^2$, or even 40 to 50 $g/m^2$. When the amount of the bead 12 disposed in the pleat pack 2 is in such a range, the pleat pack 2 can have a self-weight deflection amount B of 30 mm or less more reliably. When the bead 12 is disposed on each of the two surfaces of the filter medium 11, the surfaces may have substantially the same amount of the bead 12 disposed. In the present specification, the surfaces are considered to have substantially the same amount of the bead 12 disposed when the ratio between the amounts of the beads 12 disposed is in the range of 0.95 to 1.05.

Any known technique can be employed for the pleating of the filter medium 11. The pleating of the filter medium 11 can be performed, for example, using a reciprocating pleating machine or a rotary pleating machine.

The frame 3 is formed of, for example, a metal, a resin, or a composite material thereof. When the frame 3 is formed of a resin, the pleat pack 2 can be fixed to the frame 3 at the time of formation of the frame 3. The configuration of the frame 3 may be the same as that of a frame included in a conventional air filter unit.

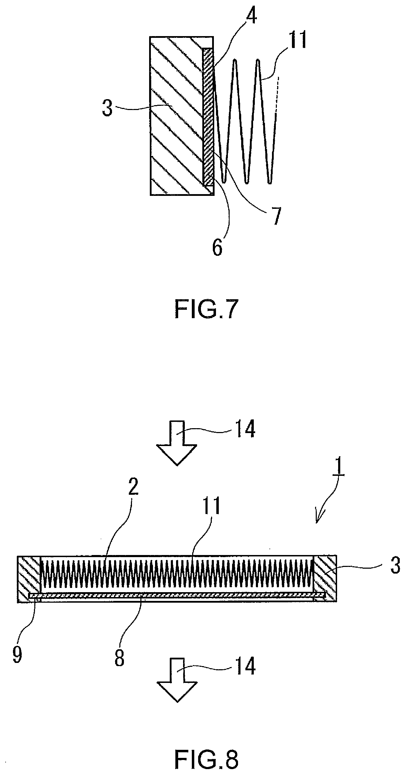

The entire perimeter of the peripheral portion 4 of the pleat pack 2 is supported by the frame 3. FIG. 7 shows an example of a state where the peripheral portion 4 is supported by the frame 3. In the example shown in FIG. 7, the peripheral portion 4 is fixed to the frame 3 at a depressed portion 6 of the frame 3 having a C-shaped cross-section. More specifically, a caulking agent 7 fills the depressed portion 6 along the entire perimeter of the frame 3, and the peripheral portion 4 is supported by the caulking agent 7 filling the depressed portion 6. An example of the caulking agent is a two-component epoxy caulking agent. The caulking agent is not limited to the example.

The air filter unit 1 may include an additional member in addition to the pleat pack 2 and the frame 3 as long as the self-weight deflection amount B of the pleat pack 2 is 30 mm or less. FIG. 8 shows an example of the air filter unit 1 including a lath net 8 as the additional member. When the air filter unit 1 is viewed from the downstream side of an airflow 14, which passes through the air filter unit 1 when the unit 1 is in use, the lath net 8 of the air filter unit 1 shown in FIG. 8 is disposed so as to cover the pleat pack 2. The lath net 8 is disposed closer to the downstream side of the airflow 14 than the pleat pack 2 is. The lath net 8 has the function of protecting the pleat pack 2. In the air filter unit 1 in FIG. 8, a peripheral portion of the lath net 8 is inserted in a slit 9 arranged on the frame 3, so that the lath net 8 is fixed to the frame 3. The way the lath net 8 is fixed to the frame is not limited to this example.

A lath net included in any known air filter unit can be used as the lath net 8. The material forming the lath net 8 is, for example, a metal, a resin, or a composite material thereof. A typical example of the lath net 8 is a metal mesh such as expanded metal or a wire mesh. The surface of the lath net 8 on the pleat pack 2 side is preferably flat in the air filter unit 1. More specifically, the surface preferably has no projecting portion such as a rib projecting toward the pleat pack 2. When the above surface of the lath net 8 is flat, the degree of contact between the pleat pack 2 and the lath net 8 attributable to self-weight deflection can be reduced.

The air filter unit 1 can have a configuration in which a member connected to the frame 3 is not in contact with the pleat pack 2 when the frame 3 is vertically held. Moreover, the air filter unit 1 including the lath net 8 can have a configuration in which the lath net 8 or a member connected to the lath net is not in contact with the pleat pack 2 when the frame 3 is vertically held.

The air filter unit 1 may include a prefilter as an additional member in addition to the pleat pack 2 and the frame 3. The prefilter is typically disposed closer to the upstream side of the airflow 14 than the pleat pack 2 is so as to cover the pleat pack 2 when the unit 1 is viewed from the upstream side of the airflow 14. A prefilter included in any known air filter unit can be used as the prefilter. The prefilter is formed of, for example, non-woven fabric. The collection efficiency of the prefilter is commonly smaller than the collection efficiency of the filter medium 11. The prefilter can collect relatively large particles included in air yet to pass through the pleat pack 2.

When the frame 3 is held horizontally and air passes through the air filter unit 1 from top to bottom at the nominal flow rate of the unit 1, the pressure loss $\Delta P$ of the air filter unit 1 is, for example, 110 Pa or less, and may be 100 Pa or less, 90 Pa or less, or even 60 Pa or less. The lower limit of the pressure loss $\Delta P$ is, for example, but not limited to, 30 Pa or more. The pressure loss of an air filter unit can be determined in accordance with the pressure loss test in the test method type 1 specified in JIS B 9908:2011. To evaluate the pressure loss $\Delta P$ of an air filter unit with its frame held horizontally, an apparatus can be used, for example, having the same configuration as that of a test apparatus as in the type 1 specified in JIS B 9908:2011, capable of fixing the air filter unit with the frame held horizontally, and capable of letting air flow from top to bottom through the air filter unit fixed.

When the frame 3 is held horizontally and air passes through the air filter unit 1 from top to bottom at the nominal flow rate of the unit 1, the structural pressure loss of the air filter unit 1 is, for example, 10 Pa or less, and may be 8 Pa or less, 6 Pa or less, 5 Pa or less, or even 3 Pa or less. The lower limit of the structural pressure loss is, for example, but not limited to, 1 Pa or more. The structural pressure loss of the air filter unit 1 can be determined by subtracting a theoretical pressure loss $\Delta P_0$ determined assuming that there is no structural pressure loss from the pressure loss $\Delta P$ (actual measured value) of the air filter unit 1. Assuming that there is no structural pressure loss, the pressure loss of the air filter unit including the filter medium 11 having a given pressure loss $PL_F$ varies in proportion to the linear velocity of air passing through the filter medium 11 from $PL_F$ as a baseline. Therefore, the pressure loss $\Delta P_0$ can be determined by the following equation using the pressure loss $PL_F$ (unit: Pa) of the filter medium 11 included in the air filter unit 1, a filtration area FS (unit: $m^2$) of the air filter unit 1, and a nominal flow rate Q (unit: $m^3/min$) of the air filter unit 1: $\Delta P_0 = PL_F/5.3 \times \{(Q/FS)/60\}$. "5.3" is the linear velocity (unit: cm/sec) of air in the measurement of the pressure loss $PL_F$ of the filter medium 11. "(Q/FS)/60" corresponds to the linear velocity (unit: cm/sec) of air passing through the filter medium 11 included in the air filter unit 1 when air passes through the air filter unit 1 at the nominal flow rate Q. The filtration area FS of the air filter unit 1 can be calculated from the opening area S and the pleat width W and pleat height H of the filter medium 11 in the air filter unit 1.

When the frame 3 is held horizontally and air passes through the air filter unit 1 from top to bottom at the nominal flow rate of the unit 1, the proportion of the structural pressure loss in the pressure loss $\Delta P$ of the air filter unit 1 is, for example, 10% or less, and may be 8% or less, 6% or less, or even 5% or less. The lower limit of the proportion is, for example, but not limited to, 2% or more.

The filtration performance of the air filter unit 1 is, for example, Class H13 or higher. The filtration performance of the air filter unit 1 may be Class H14, as specified in EN 1822-1:2009, or higher, Class U15 or higher, or even Class U16 or higher.

The collection efficiency of the air filter unit 1 is, for example, 99.95% or more, and may be 99.99% or more, 99.995% or more, 99.999% or more, 99.9995% or more, or even 99.9999% or more. The upper limit of the collection efficiency is, for example, but not limited to, 99.999999% or less.

The collection efficiency of an air filter unit can be evaluated under the following measurement conditions and by the following measurement method in accordance with a method as specified in EN 1822-1:2009. It should be noted that the collection efficiency determined using polydisperse (particle diameter: 0.10 to 0.20 pm; average particle diameter: 0.15 pm) test particles is employed as the collection efficiency of an air filter unit, instead of the collection efficiency determined using particles having the most penetrating particle size (MPPS).

- Test particles: PAO (polyalphaolefin)
- Test particle diameter: 0.1 pm or more
- Particle concentration on upstream side: $1.0 \times 10^8$ particles/L or more
- Face velocity: $0.4 \pm 0.1$ m/sec

Following the method as specified in EN 1822-1:2009, the total number of PAO particles leaking to the downstream side of the opening part of an air filter unit is measured by scanning the air filter unit surface on the downstream side with a probe having a 50 mm × 10 mm opening portion for measurement at 22 m/sec. Next, the particle concentration on the downstream side is determined from the measured total number of PAO particles. The collection efficiency of the air filter unit can be determined by the following equation from the determined particle concentration on the downstream side and the above particle concentration on the upstream side: collection efficiency (%) = [1 - (particle concentration on downstream side/particle concentration on upstream side)] × 100

The air filter unit 1 can be used with the frame 3 held at any angle. The air filter unit 1 can be used, for example, with the frame 3 held horizontally.

In the air filter unit 1, the pleat pack 2 may be horizontal or may deflect downward when the frame 3 is held horizontally with the air (air to be filtered) inflow side up. It should be noted that the self-weight deflection amount B is 30 mm or less.

The air filter unit 1 can be used, for example, in an air conditioner. The air conditioner is, for example, the above-described air conditioner of the present disclosure. The air conditioner of the present disclosure can include the air filter unit 1 as the air filter unit 27. The air filter unit 1 may be disposed in a flow path of air in the air conditioner, with the frame 3 held horizontally. The air filter unit 1 may be disposed so that the air filter unit 1 can be detachable from the flow path.

Examples of the air conditioner including the air filter unit 1 include an FFU (FFUs include EFUs) and an air conditioner system including an FFU. More specific examples of the air conditioner including the air filter unit 1 include the FFU 21 shown in FIG. 1 and the air conditioner system shown in FIG. 3. The air conditioner is, for example, an air conditioner for a clean room.

EXAMPLES

Hereinafter, the present invention will be described more specifically by way of examples. The present invention is not limited to the following examples.

The methods for evaluating filter mediums, air filter units, and FFUs produced as the examples will be described hereinafter.

[Self-weight deflection amount B]

The self-weight deflection amount B of a pleat pack included in each air filter unit was evaluated by the method previously described.

[Structural pressure loss, pressure loss, collection efficiency, and PF value]

The pressure loss and collection efficiency of each filter medium and each air filter unit and the structural pressure loss of each air filter unit were evaluated by the methods previously described. The pressure loss and structural pressure loss of each air filter unit are values measured when its frame is held horizontally and air passes through the air filter unit from top to bottom at the unit's nominal flow rate. The pressure loss and collection efficiency of each filter medium are values measured when air passes through the filter medium at a linear velocity of 5.3 cm/sec. The PF value of each filter medium was calculated by the following equation (3) from the pressure loss $PL_F$ and collection efficiency $CE_F$ determined in the above evaluations for the filter medium.

$$\text{Equation (3): PF value} = \{-\log[(100 - CE_F)/100]/PL_F\} \times 100$$

[Power consumption efficiency]

The power consumption efficiency of each FFU was calculated by the following equation (1) from the nominal flow rate Q and opening area S of the air filter unit thereof and the pressure loss $\Delta P$ determined in the above evaluation for the air filter unit. The blowing efficiency $\eta$ in the equation (1) is 0.75.

$$\text{Equation (1): power consumption efficiency } kWh/(m^2 \cdot yr) = \{(Q \times \Delta P)/(\eta \times 1000)\} \times (24 \times 365)/S$$

[Production of filter medium]

(Filter medium A)

100 parts by weight of a PTFE fine powder (F-104 manufactured by DAIKIN INDUSTRIES, LTD.) and 25 parts by weight of dodecane serving as a liquid lubricant were uniformly mixed, and the resulting mixture was preformed. Next, the preformed body was formed into a rod shape by paste extrusion, and the resulting formed body was calendered by rolls to obtain a belt-shaped sheet with a thickness of 200 pm. Next, the resulting sheet was stretched in the MD direction at a stretching temperature of 250°C and a stretching ratio of 15, and then in the TD direction at a stretching temperature of 170°C and a stretching ratio of 30. Subsequently, the stretched sheet was sintered at 500°C to obtain a PTFE porous membrane A. The PTFE porous membrane A had a thickness of 3 pm.

Next, the PTFE porous membrane A and a pair of air-permeable supporting members were layered in such a manner that the PTFE porous membrane A was sandwiched by the air-permeable supporting members. This layered product was joined by thermal lamination to obtain a filter medium A having a layered structure consisting of "air-permeable supporting member/PTFE porous membrane/air-permeable supporting member". ELEVES S0403WDO (thickness: 290 pm; surface density: 40 g/m$^2$) manufactured by UNITIKALTD. was used as the air-permeable supporting members. The surface density of the filter medium A was 81 g/m$^2$, the collection efficiency $CE_F$ thereof was 99.90%, the pressure loss $PL_F$ thereof was 101 Pa, and the PF value thereof was 30.0.

(Filter medium B)

A PTFE porous membrane B was obtained in the same manner as in the formation of the PTFE porous membrane A, except that the stretching temperature in the TD direction was 110°C. The PTFE porous membrane B had a thickness of 4 pm. Next, a filter medium B having a layered structure consisting of "air-permeable supporting member/PTFE porous membrane/air-permeable supporting member" was obtained in the same manner as in the formation of the filter medium A, except that the PTFE porous membrane B was used instead of the PTFE porous membrane A and that ELEVES S0303WDO (thickness: 230 pm; surface density: 30 g/m$^2$) manufactured by UNITIKALTD. was used as the air-permeable supporting members. The surface density of the filter medium B was 61 g/m$^2$, the collection efficiency $CE_F$ thereof was 99.991%, the pressure loss $PL_F$ thereof was 138 Pa, and the PF value thereof was 28.7.

(Filter medium C)

A PTFE porous membrane C was obtained in the same manner as in the formation of the PTFE porous membrane A, except that the stretching ratio in the MD direction was 10 and that the stretching temperature in the TD direction was 110°C. The PTFE porous membrane C had a thickness of 5 pm. Next, a filter medium C having a layered structure consisting of "air-permeable supporting member/PTFE porous membrane/air-permeable supporting member" was obtained in the same manner as in the formation of the filter medium A, except that the PTFE porous membrane C was used instead of the PTFE porous membrane A and that ELEVES S0303WDO (thickness: 230 pm; surface density: 30 g/m$^2$) manufactured by UNITIKALTD. was used as the air-permeable supporting members. The surface density of the filter medium C was 61 g/m$^2$, the collection efficiency $CE_F$ thereof was 99.9999%, the pressure loss $PL_F$ thereof was 221 Pa, and the PF value thereof was 26.6.

(Filter medium D)

A PTFE porous membrane D was obtained in the same manner as in the formation of the PTFE porous membrane A, except that the stretching ratio in the MD direction was 9 and that the stretching temperature in the TD direction was 110°C. The PTFE porous membrane D had a thickness of 5 pm. Next, a filter medium D having a layered structure consisting of "air-permeable supporting member/PTFE porous membrane/air-permeable supporting member" was obtained in the same manner as in the formation of the filter medium A, except that the PTFE porous membrane D was used instead of the PTFE porous membrane A and that ELEVES S0303WDO (thickness: 230 pm; surface density: 30 g/m$^2$) manufactured by UNITIKALTD. was used as the air-permeable supporting members. The surface density of the filter medium D was 61 g/m$^2$, the collection efficiency $CE_F$ thereof was 99.99998%, the pressure loss $PL_F$ thereof was 250 Pa, and the PF value thereof was 26.3.

(Filter medium E)

A glass filter medium SB320-A (thickness: 380 pm) manufactured by Hokuetsu Paper Mills, Ltd. was prepared as a filter medium E. The surface density of the filter medium E was 70 g/m$^2$, the collection efficiency $CE_F$ thereof was 99.97%, the pressure loss $PL_F$ thereof was 278 Pa, and the PF value thereof was 12.4.

(Filter medium F)

A glass filter medium SB380-A (thickness: 380 pm) manufactured by Hokuetsu Paper Mills, Ltd. was prepared as a filter medium F. The surface density of the filter medium F was 70 g/m$^2$, the collection efficiency $CE_F$ thereof was 99.992%, the pressure loss $PL_F$ thereof was 315 Pa, and the PF value thereof was 12.7.

(Filter medium G)

A glass filter medium SB111-A (thickness: 380 pm) manufactured by Hokuetsu Paper Mills, Ltd. was prepared as a filter medium G. The surface density of the filter medium G was 73 g/m$^2$, the collection efficiency $CE_F$ thereof was 99.999%, the pressure loss $PL_F$ thereof was 380 Pa, and the PF value thereof was 12.9.

[Production of air filter unit]

(Sample 1)

The filter medium A was pleated to have a pleat height H of 30 mm and a pleat width W of 3.2 mm. Next, a bead was formed on one surface of the pleated filter medium A by applying thereto a hot-melt adhesive (Technomelt Q 3115 manufactured by Henkel AG & Co. KGaA) including ethylene-vinyl acetate copolymer. A pleat pack was thus produced. The amount of the bead disposed was 62 g/m$^2$. Subsequently, the pleat pack thus formed was fixed using a caulking agent to an aluminum frame (opening area: 1.35 $m^2$; thickness: 75 mm) having outer dimensions of 1220 mm $\times$ 1220 mm and including an opening having dimensions of 1180 mm $\times$ 1180 mm so that the four sides of the pleat pack would be in close contact to the frame. An air filter unit was thus obtained. The caulking agent used was a two-component epoxy caulking agent (manufactured by Henkel AG & Co. KGaA; a 3:1 (in weight ratio) mixture of Macroplast 8104 MC-18 and Macroplast UK 5400). The nominal flow rate Q of the air filter unit was 40 $m^3$/min, the collection efficiency thereof was 99.980%, the pressure loss $\Delta P$ thereof was 49.7 Pa, the structural pressure loss thereof was 2.5 Pa, the proportion of the structural pressure loss in the pressure loss $\Delta P$ was 5.0%, the self-weight deflection amount B thereof was 27 mm, and the filtration performance thereof was comparable to Class H13 in terms of filtration performance categories as specified in EN 1822-1:2009.

(Sample 2)

An air filter unit was obtained in the same manner as in Sample 1, except that the filter medium B was used instead of the filter medium A and that the pleat height H was set to 35 mm in the pleating. The nominal flow rate Q of the air filter unit was 40 $m^3$/min, the collection efficiency thereof was 99.997%, the pressure loss $\Delta P$ thereof was 59.9 Pa, the structural pressure loss thereof was 4.7 Pa, the proportion of the structural pressure loss in the pressure loss $\Delta P$ was 7.8%, the self-weight deflection amount B thereof was 26 mm, and the filtration performance thereof was comparable to Class H14 in terms of filtration performance categories as specified in EN 1822-1:2009.

(Sample 3)

An air filter unit was obtained in the same manner as in Sample 2, except that the amount of the bead disposed was 48 $g/m^2$. The nominal flow rate Q of the air filter unit was 40 $m^3$/min, the collection efficiency thereof was 99.997%, the pressure loss $\Delta P$ thereof was 59.5 Pa, the structural pressure loss thereof was 4.2 Pa, the proportion of the structural pressure loss in the pressure loss $\Delta P$ was 7.0%, the self-weight deflection amount B thereof was 24 mm, and the filtration performance thereof was comparable to Class H14 in terms of filtration performance categories as specified in EN 1822-1:2009.

(Sample 4)

An air filter unit was obtained in the same manner as in Sample 2, except that the pleat height H was set to 40 mm in the pleating. The nominal flow rate Q of the air filter unit was 40 $m^3$/min, the collection efficiency thereof was 99.998%, the pressure loss $\Delta P$ thereof was 53.7 Pa, the structural pressure loss thereof was 5.3 Pa, the proportion of the structural pressure loss in the pressure loss $\Delta P$ was 9.9%, the self-weight deflection amount B thereof was 24 mm, and the filtration performance thereof was comparable to Class H14 in terms of filtration performance categories as specified in EN 1822-1:2009.

(Sample 5)

An air filter unit was obtained in the same manner as in Sample 1, except that the filter medium C was used instead of the filter medium A and that the pleat height H was set to 35 mm in the pleating. The nominal flow rate Q of the air filter unit was 40 $m^3$/min, the collection efficiency thereof was 99.99993%, the pressure loss $\Delta P$ thereof was 96.0 Pa, the structural pressure loss thereof was 7.4 Pa, the proportion of the structural pressure loss in the pressure loss $\Delta P$ was 7.8%, the self-weight deflection amount B thereof was 26 mm, and the filtration performance thereof was comparable to Class U15 in terms of filtration performance categories as specified in EN 1822-1:2009.

(Sample 6)

An air filter unit was obtained in the same manner as in Sample 5, except that the pleat height H was set to 30 mm in the pleating. The nominal flow rate Q of the air filter unit was 40 $m^3$/min, the collection efficiency thereof was 99.99990%, the pressure loss $\Delta P$ thereof was 108.8 Pa, the structural pressure loss thereof was 5.5 Pa, the proportion of the structural pressure loss in the pressure loss $\Delta P$ was 5.0%, the self-weight deflection amount B thereof was 26 mm, and the filtration performance thereof was comparable to Class U15 in terms of filtration performance categories as specified in EN 1822-1:2009.

An increase in the opening area of an air filter unit increases the self-weight of a portion of the filter medium, the portion being surrounded by the frame. To support the self-weight, persons skilled in the art would increase the amount of the bead disposed (to, for example, about 91 $g/m^2$ in the case of a filter medium including a PTFE porous membrane) as a spacer to firmly hold the pleated shape of the filter medium. Contrary to such common technical knowledge of persons skilled in the art, the amount of the bead disposed is purposely decreased in Samples 1 to 6.

(Sample 7: Comparative Example)

An air filter unit was obtained in the same manner as in Sample 1, except that the filter medium D was used instead of the filter medium A, that the pleat height H was set to 35 mm in the pleating, and that the amount of the bead disposed was 91 g/m$^2$. The nominal flow rate Q of the air filter unit was 40 m$^3$/min, the collection efficiency thereof was 99.99999%, the pressure loss $\Delta$P thereof was 110.3 Pa, the structural pressure loss thereof was 11.3 Pa, the proportion of the structural pressure loss in the pressure loss $\Delta$P was 10.2%, the self-weight deflection amount B thereof was 33 mm, and the filtration performance thereof was comparable to Class U15 in terms of filtration performance categories as specified in EN 1822-1:2009.

(Sample 8: Comparative Example)

An air filter unit was obtained in the same manner as in Sample 1, except that the filter medium E was used instead of the filter medium A and that the pleat height H was set to 40 mm in the pleating. The nominal flow rate Q of the air filter unit was 40 m$^3$/min, the collection efficiency thereof was 99.990%, the pressure loss $\Delta$P thereof was 111.5 Pa, the structural pressure loss thereof was 14.0 Pa, the proportion of the structural pressure loss in the pressure loss $\Delta$P was 12.6%, the self-weight deflection amount B thereof was 28 mm, and the filtration performance thereof was comparable to Class H13 in terms of filtration performance categories as specified in EN 1822-1:2009.

(Sample 9: Comparative Example)

An air filter unit was obtained in the same manner as in Sample 1, except that the filter medium F was used instead of the filter medium A and that the pleat height H was set to 40 mm in the pleating. The nominal flow rate Q of the air filter unit was 40 m$^3$/min, the collection efficiency thereof was 99.9980%, the pressure loss $\Delta$P thereof was 126.3 Pa, the structural pressure loss thereof was 15.9 Pa, the proportion of the structural pressure loss in the pressure loss $\Delta$P was 12.6%, the self-weight deflection amount B thereof was 28 mm, and the filtration performance thereof was comparable to Class H14 in terms of filtration performance categories as specified in EN 1822-1:2009.

(Sample 10: Comparative Example)

An air filter unit was obtained in the same manner as in Sample 1, except that the filter medium G was used instead of the filter medium A and that the pleat height H was set to 40 mm in the pleating. The nominal flow rate Q of the air filter unit was 40 m$^3$/min, the collection efficiency thereof was 99.9998%, the pressure loss $\Delta$P thereof was 153.3 Pa, the structural pressure loss thereof was 20.1 Pa, the proportion of the structural pressure loss in the pressure loss $\Delta$P was 13.1%, the self-weight deflection amount B thereof was 29 mm, and the filtration performance thereof was comparable to Class U15 in terms of filtration performance categories as specified in EN 1822-1:2009.

The evaluation results for Samples 1 to 10 are shown in the following Tables 1 to 3. The column "filtration performance" in Table 2 is filled with the filtration performance categories as specified in EN 1822-1:2009.

[Table 1]

| Sample | Filter medium | PF value of filter medium | Pleat height (mm) | Amount of bead disposed (g/m$^2$) | Self-weight deflection amount B (mm) |
|---|---|---|---|---|---|
| 1 | A | 30.0 | 30 | 62 | 27 |
| 2 | B | 28.7 | 35 | 62 | 26 |
| 3 | B | 28.7 | 35 | 48 | 24 |
| 4 | B | 28.7 | 40 | 62 | 24 |
| 5 | C | 26.6 | 35 | 62 | 26 |
| 6 | C | 26.6 | 30 | 62 | 26 |
| 7 (Comparative Example) | D | 26.3 | 35 | 91 | 33 |

(continued)

| Sample | Filter medium | PF value of filter medium | Pleat height (mm) | Amount of bead disposed (g/m$^2$) | Self-weight deflection amount B (mm) |
|---|---|---|---|---|---|
| 8 (Comparative Example) | E | 12.4 | 40 | 62 | 28 |
| 9 (Comparative Example) | F | 12.7 | 40 | 62 | 28 |
| 10 (Comparative Example) | G | 12.9 | 40 | 62 | 29 |

[Table 2]

| Sample | Nominal flow rate (m$^3$/min) | Collection efficiency (%) | Pressure loss (Pa) | Structural pressure loss (Pa) | Proportion of structural pressure loss in pressure loss (%) | Filtration performance |
|---|---|---|---|---|---|---|
| 1 | 40 | 99.980 | 49.7 | 2.5 | 5.0 | H13 |
| 2 | 40 | 99.997 | 59.9 | 4.7 | 7.8 | H14 |
| 3 | 40 | 99.997 | 59.5 | 4.2 | 7.0 | H14 |
| 4 | 40 | 99.998 | 53.7 | 5.3 | 9.9 | H14 |
| 5 | 40 | 99.99993 | 96.0 | 7.4 | 7.8 | U15 |
| 6 | 40 | 99.99990 | 108.8 | 5.5 | 5.0 | U15 |
| 7 (Comparative Example) | 40 | 99.99999 | 110.3 | 11.3 | 10.2 | U15 |
| 8 (Comparative Example) | 40 | 99.990 | 111.5 | 14.0 | 12.6 | H13 |
| 9 (Comparative Example) | 40 | 99.9980 | 126.3 | 15.9 | 12.6 | H14 |
| 10 (Comparative Example) | 40 | 99.9998 | 153.3 | 20.1 | 13.1 | U15 |

[Table 3]

| Sample | Power consumption efficiency (kWh/(m$^2$ • yr)) |
|---|---|
| 1 | 273.4 |
| 2 | 329.6 |
| 3 | 327.0 |
| 4 | 295.3 |
| 5 | 527.8 |
| 6 | 598.2 |
| 7 (Comparative Example) | 606.4 |
| 8 (Comparative Example) | 613.1 |

(continued)

| Sample | Power consumption efficiency (kWh/(m$^2$ • yr)) |
|---|---|
| 9 (Comparative Example) | 694.7 |
| 10 (Comparative Example) | 842.9 |

INDUSTRIAL APPLICABILITY

The air conditioner of the present invention can be used, for example, as an air conditioner for a clean room to supply clean air to the clean room.

**Claims**

1.  An air conditioner comprising a fan filter unit, wherein
    the fan filter unit comprises:

    a flow path of air, the flow path comprising an intake port and an exhaust port;
    a fan that creates a flow of the air from the intake port to the exhaust port; and
    an air filter unit that is disposed in the flow path and that filters the air introduced through the intake port,

    the air filter unit comprises a filter pleat pack and a frame supporting the entire perimeter of a peripheral portion of the filter pleat pack,
    an opening area of the air filter unit is 1.35 m$^2$ or more,
    filtration performance of the air filter unit is Class H13, as specified in European Norm (EN) 1822-1:2009, or higher, and
    when the fan filter unit is operated in such a manner that blowing efficiency η of the fan is 0.75, power consumption efficiency determined for the fan filter unit by the following equation is 600 kWh/(m$^2$•yr) or less:

    $$\text{equation: power consumption efficiency } \mathrm{kWh/(m^2 \cdot yr)} = \{(Q \times \Delta P)/(\eta \times 1000)\} \times (24 \times 365)/S,$$

    wherein Q represents a nominal flow rate (m$^3$/sec) of the air filter unit, ΔP represents a pressure loss (Pa) of the air filter unit measured when air passes through the air filter unit at the nominal flow rate of the unit, and S represents the opening area (m$^2$) of the air filter unit.

2.  An air filter unit, comprising:

    a filter pleat pack; and
    a frame supporting the entire perimeter of a peripheral portion of the filter pleat pack, wherein
    an opening area of the air filter unit is 1.35 m$^2$ or more,
    a PF value of a filter medium comprised in the filter pleat pack is 23 or more, and
    a self-weight deflection amount of the filter pleat pack evaluated with the frame held horizontally and in a state where the filter pleat pack excluding the peripheral portion is free is 30 mm or less.

3.  The air filter unit according to claim 2, wherein when the frame is held horizontally and air passes through the air filter unit from top to bottom at a nominal flow rate, the proportion of a structural pressure loss in a pressure loss of the air filter unit is 10% or less.

4.  The air filter unit according to claim 2 or 3, wherein a pressure loss of the filter medium measured when air passes through the filter medium at a linear velocity of 5.3 cm/sec is 10 to 400 Pa.

5.  The air filter unit according to any one of claims 2 to 4, wherein a pleat height of the filter medium in the filter pleat pack is 25 to 40 mm.

6.  The air filter unit according to any one of claims 2 to 5, having filtration performance of Class H13, as specified in European Norm (EN) 1822-1:2009, or higher.

7. The air filter unit according to any one of claims 2 to 6, wherein the filter medium comprises a polytetrafluoroethylene (PTFE) porous membrane.

FIG.1

FIG.2

FIG.3

FIG.4

FIG.5

FIG.6

FIG.7

FIG.8

103　　　　　　102　　　　　104　　　　　101

FIG.9

## INTERNATIONAL SEARCH REPORT

International application No.

PCT/JP2019/025479

A.    CLASSIFICATION OF SUBJECT MATTER
Int.Cl.    F24F7/06(2006.01)i, B01D39/16(2006.01)i, B01D46/52(2006.01)i,
           F24F3/16(2006.01)i, F24F13/28(2006.01)i

According to International Patent Classification (IPC) or to both national classification and IPC

B.    FIELDS SEARCHED

Minimum documentation searched (classification system followed by classification symbols)
Int.Cl. F24F7/06, B01D39/16, B01D46/52, F24F3/16, F24F13/28

Documentation searched other than minimum documentation to the extent that such documents are included in the fields searched
    Published examined utility model applications of Japan           1922–1996
    Published unexamined utility model applications of Japan         1971–2019
    Registered utility model specifications of Japan                 1996–2019
    Published registered utility model applications of Japan         1994–2019

Electronic data base consulted during the international search (name of data base and, where practicable, search terms used)

C.    DOCUMENTS CONSIDERED TO BE RELEVANT

| Category* | Citation of document, with indication, where appropriate, of the relevant passages | Relevant to claim No. |
|---|---|---|
| Y | JP 2011-226770 A (SHIMIZU CORP.) 10 November 2011, paragraphs [0019]-[0041], fig. 1-5 (Family: none) | 1 |
| Y | JP 2011-200798 A (NITTA CORP.) 13 October 2011, paragraphs [0013]-[0020], fig. 1-5 (Family: none) | 1 |

☒    Further documents are listed in the continuation of Box C.        ☐    See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 28 August 2019 (28.08.2019) | 10 September 2019 (10.09.2019) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

| International application No. |
| --- |
| PCT/JP2019/025479 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 2004-990 A (DAIKIN INDUSTRIES, LTD.) 08 January 2004, paragraphs [0008]-[0097] & JP 2001-170461 A & US 6416562 B1 & EP 1090676 A1, paragraphs [0015]-[0158] & KR 10-2001-0049842 A & CN 1292302 A & CN 1494940 A & CA 2317373 A1 | 1-7 |
| Y | JP 2014-64995 A (JAPAN VILENE COMPANY, LTD.) 17 April 2014, paragraphs [0028]-[0029], [0032], fig. 1-7 (Family: none) | 1 |
| Y | JP 2001-62234 A (NIPPON MUKI CO., LTD.) 13 March 2001, paragraphs [0001]-[0020], fig. 1-2 & TW 455504 B & SG 80102 A | 1-7 |
| Y | JP 8-108015 A (NIPPONDENSO CO., LTD.) 30 April 1996, paragraphs [0025]-[0027], [0046]-[0047], fig. 1, 13 & US 5792229 A, column 10, line 52 to column 11, line 14, column 13, lines 13-27, fig. 25, 36 & DE 19524677 A1 | 2-7 |
| Y | JP 5-103936 A (SANYO ELECTRIC CO., LTD.) 27 April 1993, paragraphs [0004]-[0040], fig. 1-4 (Family: none) | 2-7 |
| A | WO 2005/077492 A1 (NIPPON MUKI CO., LTD.) 25 August 2005, entire text, all drawings & KR 10-2006-0120295 A & CN 1705503 A | 1-7 |

Form PCT/ISA/210 (continuation of second sheet) (January 2015)

## INTERNATIONAL SEARCH REPORT

| International application No. |
| --- |
| PCT/JP2019/025479 |

**Box No. II      Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III      Observations where unity of invention is lacking (Continuation of item 3 of first sheet)**

This International Searching Authority found multiple inventions in this international application, as follows:
See extra sheet

1. ☒ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**      ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☒ No protest accompanied the payment of additional search fees.

Form PCT/ISA/210 (continuation of first sheet (2)) (January 2015)

**INTERNATIONAL SEARCH REPORT**

| International application No. |
|---|
| PCT/JP2019/025479 |

\<Continuation of Box No. III\>

Document 4: JP 2014-64995 A (JAPAN VILENE COMPANY, LTD.) 17 April 2014, paragraphs [0028]-[0029], [0032], fig. 1-7 (Family: none)
Document 5: JP 2001-62234 A (NIPPON MUKI CO., LTD.) 13 March 2001, paragraphs [0001]-[0020], fig. 1-2 & TW 455504 B & SG 80102 A

(Invention 1) Claim 1
    Claim 1 has the special technical feature of an "air conditioner in which power consumption efficiency of the air blower filter unit given by following Equation is at most 600 kWh(m$^2$·year) when driving the air blower filter unit so that a collecting ability of the air filter unit is at least class H13 defined by European Standard (EN) 1822-1:2009, and air blowing efficiency of the air blower η is 0.75,
    wherein Equation: power consumption efficiency kWh/(m$^2$·year)={(Q×ΔP)/(η×1000)}×(24×365)/S,
    where Q of Equation is a rated flow rate (m$^3$/sec) of the air filter unit, ΔP is a pressure drop (pa) in the air filter unit with respect to air that passes through the air filter unit at the rated flow rate for the unit, and S is an opening area (m$^2$) of the air filter unit," and is thus classified as invention 1.

(Invention 2) Claims 2-7
    Claims 2-7 share, with claim 1 classified as invention 1, the special technical feature of "comprising: a filter pleat pack; and a frame body for supporting a peripheral end portion of the filter pleat pack over the entire periphery thereof, wherein the opening area is at least 1.35 m$^2$." However, since said technical feature does not make a contribution over the prior art in light of the disclosure of document 4 or document 5, this technical feature cannot be considered a special technical feature. Also, there are no other identical or corresponding special technical features between these inventions.
    In addition, claims 2-7 are not dependent on claim 1. Furthermore, claims 2-7 are not substantially identical or equivalent to any of the claims classified as invention 1.
    Thus, claims 2-7 cannot be classified as invention 1.
    Also, claims 2-7 have the special technical feature in which "a PF value of a filter medium constituting the filter pleat pack is at least 23, and deflection of the filter pleat pack due to its own weight is at most 30 mm when evaluated under the condition that the frame body is maintained horizontal, and the filter pleat pack except for the peripheral end portion is put in a free state," and are thus classified as invention 2.

Form PCT/ISA/210 (extra sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013228160 A